# EUROPEAN PATENT APPLICATION

(11) **EP 2 696 636 A1**
(43) Date of publication of application: **12.02.2014**
(21) Application number: 12782625.3
(22) Date of filing: 19.04.2012
(51) Int. Cl.: H04W 72/04

(54) **STATE TRANSITION METHOD, BASE STATION AND BASE STATION CONTROLLING EQUIPMENT**

(30) Priority: 10.05.2011 CN 201110119736
(71) Applicant: Huawei Technologies Co., Ltd., Shenzhen, Guangdong 518129 (CN)
(72) Inventor: LI, Bingzhao, Shenzhen, Guangdong 518129 (CN); CHEN, Yanyan, Shenzhen, Guangdong 518129 (CN)
(74) Representative: Maiwald Patentanwalts GmbH
(86) International application number: PCT/CN2012/074342
(87) International publication number: WO 2012/152173

(57) **Abstract**

Embodiments of the present invention provide a method for state transition, a base station, and a base station controller. The method includes: interacting, by a base station controller, with a base station to pre-configure a dedicated link; and, when the base station controller determines that a terminal needs to transit from a CELL_FACH state to a CELL_DCH state, instructing, by the base station controller, the base station to activate the pre-configured dedicated link and instructing the terminal to transit to the CELL_DCH state. The embodiments of the present invention avoid prolonged state transition of a UE caused by the need for an RNC to instruct, through a radio link setup process, a NodeB to set up a dedicated link for the UE, thereby effectively saving the time for the UE to transit its state.

## Description

This application claims priority to Chinese Patent Application No. 201110119736.7, filed with the Chinese Patent Office on May 10, 2011 and entitled "METHOD FOR STATE TRANSITION, BASE STATION, AND BASE STATION CONTROLLER", which is incorporated herein by reference in its entirety.

### TECHNICAL FIELD

Embodiments of the present invention relate to the field of communication technologies, and in particular, to a method for state transition, a base station, and a base station controller.

### BACKGROUND

In a Universal Mobile Telecommunication System (Universal Mobile Telecommunication System, UMTS), when the data volume of a terminal (User Equipment, UE) in a cell (CELL)_forward access channel (Forward Access Channel, FACH) state increases, a radio network controller (Radio Network Controller, RNC) may determine, according to a measurement report sent by the UE, that the UE needs to transit to a cell (CELL)_dedicated channel (Dedicated Channel, DCH) state. The RNC instructs, through a radio link setup process, a base station (NodeB) to set up a dedicated link for the UE. After the setup is successful, the RNC sends a state transition reconfiguration message, so that the UE transits its state.

However, when the RNC determines that the UE needs to transit to the CELL_DCH state, the RNC needs to instruct, through a radio link setup process, the NodeB to set up a dedicated link for the UE, which prolongs the state transition of the UE. Similar problems also exist in other communication systems.

### SUMMARY

Embodiments of the present invention provide a method for state transition, a base station, and a base station controller, to avoid prolonged state transition of a UE caused by the need for an RNC to instruct, through a radio link setup process, a NodeB to set up a dedicated link for the UE when the RNC determines that the UE needs to transit to a CELL_DCH state.

In one aspect, the present invention provides a method for state transition, including:
interacting, by a base station controller, with a base station to pre-configure a dedicated link; and
when the base station controller determines that a terminal needs to transit from a CELL_FACH state to a CELL_DCH state, instructing, by the base station controller, the base station to activate the pre-configured dedicated link and instructing the terminal to transit to the CELL_DCH state.

In another aspect, the present invention provides a method for state transition, including:
interacting, by a base station, with a base station controller to pre-configure a dedicated link; and
when the base station controller determines that a terminal needs to transit from a CELL_FACH state to a CELL_DCH state, activating, by the base station, the pre-configured dedicated link according to an instruction of the base station controller and sending a instruction for transiting to the CELL_DCH state of the base station controller to the terminal.

In another aspect, the present invention provides a base station controller, including:
a pre-configuring unit, configured to interact with a base station to pre-configure a dedicated link; and
an instructing unit, configured to instruct, when it is determined that a terminal needs to transit from a CELL_FACH state to a CELL_DCH state, the base station to activate the dedicated link pre-configured by the pre-configuring unit and instruct the terminal to transit to the CELL_DCH state.

In another aspect, the present invention provides a base station, including:
a pre-configuring unit, configured to interact with a base station controller to pre-configure a dedicated link; and
an activating unit, configured to activate, when the base station controller determines that a terminal needs to transit from a CELL_FACH state to a CELL_DCH state, the dedicated link pre-configured by the pre-configuring unit according to an instruction of the base station controller and send a instruction for transiting to the CELL_DCH state of the base station controller to the terminal.

From the above technical solution, it is obvious that the embodiments of the present invention avoid prolonged state transition of a UE caused by the need for an RNC to instruct, through a radio link setup process, a NodeB to set up a dedicated link for the UE, thereby effectively saving the time for the UE to transit its state.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a method for state transition according to an embodiment of the present invention;
FIG. 2 is a schematic flowchart of a method for state transition according to another embodiment of the present invention;
FIG. 3 is a schematic flowchart of a method for state transition according to another embodiment of the present invention;
FIG. 4 is a schematic structural diagram of a base station controller according to another embodiment of the present invention; and
FIG. 5 is a schematic structural diagram of a base station according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The technical solution of the present invention is applicable to various communication systems, such as Global System for Mobile Communications (Global System for Mobile Communications, GSM), Code Division Multiple Access (Code Division Multiple Access, CDMA), Wideband Code Division Multiple Access (Wideband Code Division Multiple Access, WCDMA), Time Division-Synchronous Code Division Multiple Access (Time Division-Synchronous Code Division Multiple Access, TD-SCDMA), General Packet Radio Service (General Packet Radio Service, GPRS), and Long Term Evolution (Long Term Evolution, LTE). For convenient description, however, WCDMA will be used for exemplary description of the embodiments herein.

A base station may be a base transceiver station (Base Transceiver Station, BTS) in GSM or CDMA, or a base station (NodeB) in WCDMA, or an evolved NodeB (Evolved NodeB, eNB or eNodeB for short) in LTE, which is not limited in the present invention. For convenient description, however, a NodeB will be used for exemplary description of the embodiments herein.

A base station controller may be a base station controller (Base Station Controller, BSC) in GSM or CDMA, or a radio network controller (Radio Network Controller, RNC) in WCDMA, which is not limited in the present invention. For convenient description, however, an RNC will be used for exemplary description of the embodiments herein.

In addition, the term "and/or" in this document is merely an association relationship that describes associated objects and indicates three possible relationships. For example, A and/or B may indicate three cases: A exists separately, both A and B exist, and B exists separately. In addition, the symbol"/" in this document usually represents that associated objects before and after the symbol are in an "or" relationship.

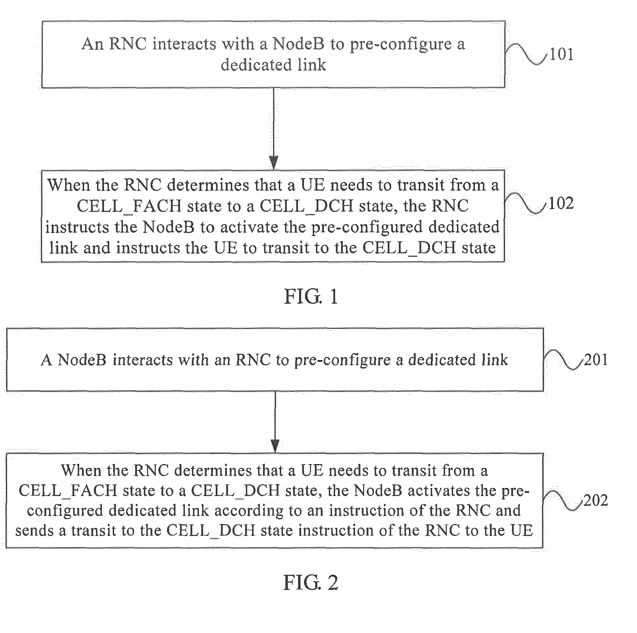

FIG. 1 is a schematic flowchart of a method for state transition according to an embodiment of the present invention. As shown in FIG. 1, the method for state transition in this embodiment may be described as follows.

101. An RNC interacts with a NodeB to pre-configure a dedicated link.

For example, after a cell is setup, the RNC may send a pre-configured link setup request message to the NodeB, where the pre-configured link setup request message includes configuration information of the pre-configured link. The configuration information of the pre-configured link refers to a series of configuration information used to pre-configure a dedicated link, and for example, may include at least one of the following:
media access control (Media Access Control, MAC)-d flow (Flow) configuration information;
fractional dedicated physical control channel (Fractional-Dedicated Physical Control Channel, F-DPCH) information; and
uplink scrambling code information.

The RNC receives a pre-configured link setup response message sent by the NodeB after the NodeB receives the pre-configured link setup request message, where the pre-configured link setup response message includes allocated resource information of the pre-configured link. The resource information of the pre-configured link refers to a series of resource information used to pre-configure a dedicated link, and for example, may include at least one of the following:
transport bearer information;
signature sequence information of enhanced dedicated channel (Enhanced Dedicated Channel, E-DCH) hybrid automatic repeat request (Hybrid Automatic Repeat reQuest, HARQ) acknowledgement indicator channel (E-DCH HARQ Acknowledgement Indicator Channel, E-HICH); and
signature sequence information of E-DCH relative grant channel (E-DCH Relative Grant Channel, E-RGCH).

In this way, a dedicated link is pre-configured between the RNC and the NodeB but the dedicated link is not activated (in a deactivated state equivalently) or associated with a specific UE.

102. When the RNC determines that the UE needs to transit from a CELL_FACH state to a CELL_DCH state, the RNC instructs the NodeB to activate the pre-configured dedicated link and instructs the UE to transit to the CELL_DCH state.

Multiple manners are available in the process of determining by the RNC that the UE needs to transit from a CELL_FACH state to a CELL_DCH state. For example, the RNC receives a traffic measurement report of the UE and determines, according to the traffic measurement report of the UE, that the UE needs to transit from a CELL_FACH state to a CELL_DCH state. For another example, the RNC may determine, according to the downlink data volume of the UE, that the UE needs to transit from a CELL_FACH state to a CELL_DCH state.

For example, the RNC instructs, by using a frame protocol (frame protocol, FP) frame, the NodeB to activate the pre-configured dedicated link and instructs the UE to transit to the CELL_DCH state. Specifically, if multiple dedicated links are pre-configured, the RNC may instruct, by including identification (ID) information of one dedicated link in the FP frame, the NodeB to activate the dedicated link corresponding to the identification information of the dedicated link. Simply, if only one dedicated link is pre-configured, there is no need to specify the identification information of the dedicated link, and the RNC may instruct, by including enable indicator information of the pre-configured dedicated link in the FP frame, the NodeB to activate the pre-configured dedicated link.

Further, in order to instruct the NodeB to modify related parameters of the pre-configured dedicated link when activating the pre-configured dedicated link, the RNC may further include in the FP frame sent to the NodeB at least one of the following:
reconfiguration parameter information of the pre-configured dedicated link, such as a frame offset parameter;
enabling feature list information of the pre-configured dedicated link;
disabled feature list information of the pre-configured dedicated link; and
identification (ID) information of a reference common (Common) E-DCH resource, used to indicate related parameter configuration of the link after transiting to the CELL_DCH state is performed by using configuration information related to the common E-DCH resource.

When the UE in the CELL_FACH state transitions its state, it is possible that the UE has contended to obtain a common E-DCH resource or the UE has not contended to obtain a common E-DCH resource. If the UE has contended to obtain a common E-DCH resource when it transits its state, during transiting to the CELL_DCH state, parameters of the E-CDH resource may be used as basic parameters which are combined with the reconfiguration parameter information of the pre-configured dedicated link to serve as the link parameters for the UE to transit to the CELL_DCH state; or, if the UE has not contended to obtain a common E-DCH resource when it transits its state, during transiting to the CELL_DCH state, which E-DCH resource is used as reference of link parameters for the UE to transit to the CELL_DCH state is determined according to the identification information of the reference common E-DCH resource.

Further, after 102, the base station controller may further receive a state update message sent by the base station, to confirm that the base station has activated the pre-configured dedicated link.

In this embodiment, before the RNC determines that the UE needs to transit to the CELL_DCH state, the RNC interacts with the NodeB to pre-configure a dedicated link, so that, when the RNC determines that the UE needs to transit from the CELL_FACH state to the CELL_DCH state, the RNC can instruct the NodeB to activate the pre-configured dedicated link and instruct the UE to transit to the CELL_DCH state. This avoids prolonged state transition of the UE caused by the need for the RNC to instruct, through a radio link setup process, the NodeB to set up a dedicated link for the UE, thereby effectively saving the time for the UE to transit its state.

FIG. 2 is a schematic flowchart of a method for state transition according to another embodiment of the present invention. As shown in FIG. 2, the method for state transition in this embodiment may be described as follows.

201. A NodeB interacts with an RNC to pre-configure a dedicated link.

For example, after a cell is setup, the NodeB receives a pre-configured link setup request message sent by the RNC, where the pre-configured link setup request message includes configuration information of the pre-configured link. The configuration information of the pre-configured link refers to a series of configuration information used to pre-configure a dedicated link, and for example, may include at least one of the following:
MAC-d flow configuration information;
F-DPCH information; and
uplink scrambling code information.

The NodeB sends a pre-configured link setup response message to the RNC after receiving the pre-configured link setup request message sent by the RNC, where the pre-configured link setup response message includes allocated resource information of the pre-configured link. The resource information of the pre-configured link refers to a series of resource information used to pre-configure a dedicated link, and for example, may include at least one of the following:
transport bearer information;
signature sequence information of E-HICH; and
signature sequence information of E-RGCH.

In this way, a dedicated link is pre-configured between the NodeB and the RNC but the dedicated link is not activated (in a deactivated state equivalently) or associated with a specific UE.

202. When the RNC determines that the UE needs to transit from a CELL_FACH state to a CELL_DCH state, the NodeB activates the pre-configured dedicated link according to an instruction of the RNC and sends a instruction for transiting to the CELL_DCH state of the RNC to the UE.

There are different processes for the RNC to determine that the UE needs to transit from a CELL_FACH state to a CELL_DCH state. For example, the RNC receives a traffic measurement report of the UE and determines, according to the traffic measurement report of the UE, that the UE needs to transit from a CELL_FACH state to a CELL_DCH state. For another example, the RNC may determine, according to the downlink data volume of the UE, that the UE needs to transit from a CELL_FACH state to a CELL_DCH state.

For example, the NodeB receives, through an FP frame, the RNC's instruction for activating the pre-configured dedicated link and activates the pre-configured dedicated link according to the instruction (that is, the NodeB activates the pre-configured dedicated link according to the instruction of the RNC included in the FP frame), and sends to the UE the instruction for transiting to the CELL_DCH state received through the FP frame from the RNC. The instruction included in the FP frame may include but is not limited to identification information of the dedicated link or enable indicator information of the dedicated link. Specifically, if multiple dedicated links are pre-configured, the FP frame received by the NodeB includes the identification (ID) information of one dedicated link, so that the NodeB can activate the dedicated link corresponding to the identification information of the dedicated link. Simply, if only one dedicated link is pre-configured, there is no need to specify the identification information of the dedicated link, and the FP frame received by the NodeB may further include enable indicator information of the pre-configured dedicated link, so that the NodeB can activate the pre-configured dedicated link.

Further, in order to instruct the NodeB to modify related parameters of the pre-configured dedicated link when activating the pre-configured dedicated link, the FP frame received by the NodeB may further include at least one of the following:
reconfiguration parameter information of the pre-configured dedicated link, such as a frame offset parameter;
enabling feature list information of the pre-configured dedicated link;
disabled feature list information of the pre-configured dedicated link; and
identification information of a reference common E-DCH resource, used to indicate related parameter configuration of the link after transiting to the CELL_DCH state is performed by using configuration information related to the common E-DCH resource.

When the UE in the CELL_FACH state transitions its state, it is possible that the UE has contended to obtain a common E-DCH resource or the UE has not contended to obtain a common E-DCH resource. If the UE has contended to obtain a common E-DCH resource when it transits its state, during transiting to the CELL_DCH state, parameters of the E-CDH resource may be used as basic parameters which are combined with the reconfiguration parameter information of the pre-configured dedicated link to serve as the link parameters for the UE to transit to the CELL_DCH state; or, if the UE has not contended to obtain a common E-DCH resource when it transits its state, during transiting to the CELL_DCH state, which set of E-DCH resource is used as a reference of link parameters for the UE to transit to the CELL_DCH state is determined according to the identification information of the reference common E-DCH resource.

Further, after 202, the base station may further send a state update message to the base station controller, to confirm to the base station controller that the pre-configured dedicated link has been activated.

In this embodiment, before the RNC determines that the UE needs to transit to the CELL_DCH state, the NodeB interacts with the RNC to pre-configure a dedicated link, so that, when the RNC determines that the UE needs to transit from the CELL_FACH state to the CELL_DCH state, the NodeB can activate the pre-configured dedicated link according to an instruction of the RNC and send to the UE a instruction for transiting to the CELL_DCH state of the RNC. This avoids prolonged state transition of the UE caused by the need for the RNC to instruct, through a radio link setup process, the NodeB to set up a dedicated link for the UE, thereby effectively saving the time for the UE to transit its state.

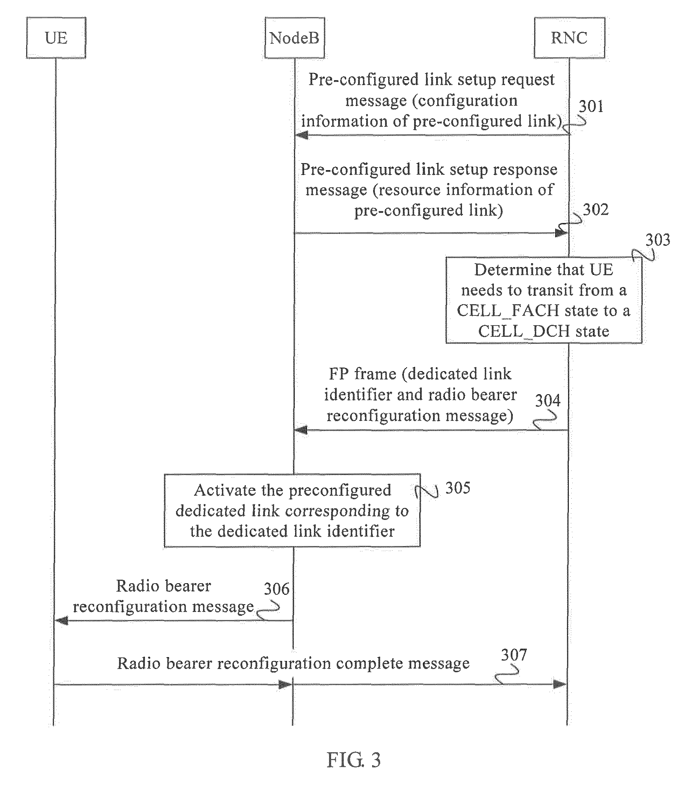

FIG. 3 is a schematic flowchart of a method for state transition according to another embodiment of the present invention. As shown in FIG. 3, the method for state transition in this embodiment may be described as follows.

301. After a cell is setup, an RNC sends a pre-configured link setup request message to a NodeB, where the pre-configured link setup request message includes configuration information of a pre-configured link.

The configuration information of the pre-configured link refers to a series of configuration information used to pre-configure a dedicated link, and for example, may include at least one of the following:
MAC-d flow configuration information;
F-DPCH information; and
uplink scrambling code information.

302. The NodeB sends a pre-configured link setup response message to the RNC, where the pre-configured link setup response message includes allocated resource information of the pre-configured link.

The resource information of the pre-configured link refers to a series of resource information used to pre-configure a dedicated link, and for example, may include at least one of the following:
transport bearer information;
signature sequence information of E-HICH; and
signature sequence information of E-RGCH.

In this way, a dedicated link is pre-configured between the RNC and the NodeB.

303. The RNC determines, according to a traffic measurement report of the UE, that the UE needs to transit from a CELL_FACH state to a CELL_DCH state.

304. The RNC sends an FP frame to the NodeB, where the FP frame includes identification information of the UE, identification information of a dedicated link and a radio bearer reconfiguration message, to instruct the NodeB to activate a pre-configured dedicated link corresponding to the identification information of the dedicated link.

The FP frame may further include at least one of the following:
reconfiguration parameter information of the pre-configured dedicated link, such as a frame offset parameter;
enabling feature list information of the pre-configured dedicated link;
disabled feature list information of the pre-configured dedicated link; and
identification information of a reference common E-DCH resource, used to indicate related parameter configuration of the link after transiting to the CELL_DCH state is performed by using configuration information related to the common E-DCH resource.

Optionally, the radio bearer reconfiguration message may include the identification information of the reference common E-DCH resource.

305. The NodeB activates the pre-configured dedicated link corresponding to the identification information of the dedicated link.

For example, the NodeB may associate, according to the identification information of the UE included in the FP frame, the pre-configured dedicated link corresponding to the identification information of the dedicated link included in the FP frame with the UE and activate the dedicated link for the UE.

For another example, if the FP frame includes reconfiguration parameter information, the NodeB may update the pre-configured dedicated link by using the reconfiguration parameter information. Then, the NodeB may associate, according to the identification information of the UE included in the FP frame, the pre-configured dedicated link corresponding to the identification information of the dedicated link included in the FP frame with the UE and activate the dedicated link for the UE.

Optionally, if the FP frame includes disabled feature list information of the pre-configured dedicated link, the NodeB will not activate these features; if the FP frame includes enabling feature list information of the pre-configured dedicated link, the NodeB will activate only these features.

Optionally, after 305, the NodeB may further send a state update message to the RNC, to confirm to the RNC that the pre-configured dedicated link has been activated.

306. The NodeB sends the radio bearer reconfiguration message to the UE.

It should be noted that the above 305 and 306 may be performed in any order.

307. The UE sends a radio bearer reconfiguration complete message to the RNC through the NodeB.

In this way, the UE transits to the CELL_DCH state.

In this embodiment, before the RNC determines that the UE needs to transit to the CELL_DCH state, the RNC interacts with the NodeB to pre-configure a dedicated link, so that, when the RNC determines that the UE needs to transit from the CELL_FACH state to the CELL_DCH state, the RNC can instruct the NodeB to activate the pre-configured dedicated link and instruct the UE to transit to the CELL_DCH state. This avoids prolonged state transition of the UE caused by the need for the RNC to instruct, through a radio link setup process, the NodeB to set up a dedicated link for the UE, thereby effectively saving the time for the UE to transit its state.

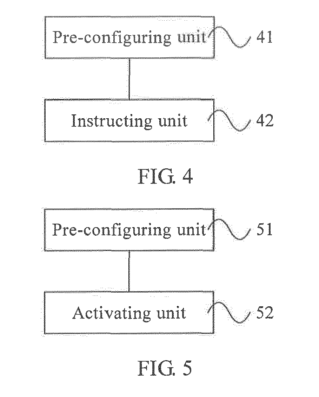

FIG. 4 is a schematic structural diagram of a base station controller according to another embodiment of the present invention. As shown in FIG. 4, the base station controller in this embodiment includes a pre-configuring unit 41 and an instructing unit 42. The pre-configuring unit 41 is configured to interact with a base station to pre-configure a dedicated link; and the instructing unit 42 is configured to instruct, when it is determined that a terminal needs to transit from a CELL_FACH state to a CELL_DCH state, the base station to activate the dedicated link pre-configured by the pre-configuring unit 41 and instruct the terminal to transit to the CELL_DCH state.

The functions of the RNC in the embodiments corresponding to FIG. 1, FIG, 2, and FIG. 3 may all be implemented by the base station controller in this embodiment.

For example, the pre-configuring unit 41 in this embodiment may specifically send a pre-configured link setup request message to the base station, where the pre-configured link setup request message includes configuration information of the pre-configured link, and receive a pre-configured link setup response message sent by the base station, where the pre-configured link setup response message includes allocated resource information of the pre-configured link. In this way, a dedicated link is pre-configured between the base station controller and the base station.

For example, the instructing unit 42 in this embodiment may specifically instruct, by using an FP frame, the base station to activate the dedicated link pre-configured by the pre-configuring unit 41 and instruct the terminal to transit to the CELL_DCH state, wherein the FP frame includes identification information of the dedicated link or enable indicator information of the dedicated link and state transition instruction information.

Further, the instructing unit 41 may further receive a state update message sent by the base station, to confirm that the base station has activated the pre-configured dedicated link.

In this embodiment, before the base station controller determines that the terminal needs to transit to the CELL_DCH state, the pre-configuring unit interacts with the base station to pre-configure a dedicated link, so that, when the base station controller determines that the terminal needs to transit from the CELL_FACH state to the CELL_DCH state, the instructing unit can instruct the base station to activate the pre-configured dedicated link and instruct the terminal to transit to the CELL_DCH state. This avoids prolonged state transition of the terminal caused by the need for the base station controller to instruct, through a radio link setup process, the base station to set up a dedicated link for the terminal, thereby effectively saving the time for the terminal to transit its state.

FIG. 5 is a schematic structural diagram of a base station according to another embodiment of the present invention. As shown in FIG. 5, the base station in this embodiment may include a pre-configuring unit 51 and an activating unit 52. The pre-configuring unit 51 is configured to interact with a base station controller to pre-configure a dedicated link; and the activating unit 51 is configured to activate, when the base station controller determines that a terminal needs to transit from a CELL_FACH state to a CELL_DCH state, (instruct) the dedicated link according to an instruction of the base station controller, where the dedicated link is pre-configured by the pre-configuring unit 51 and send a instruction for transiting to the CELL_DCH state of the base station controller to the terminal.

The functions of the NodeB in the embodiments corresponding to FIG. 1, FIG, 2, and FIG. 3 may all be implemented by the base station controller in this embodiment.

For example, the pre-configuring unit 51 in this embodiment may specifically receive a pre-configured link setup request message sent by the base station controller, where the pre-configured link setup request message includes configuration information of the pre-configured link, and send a pre-configured link setup response message to the base station controller, where the pre-configured link setup response message includes allocated resource information of the pre-configured link. In this way, a dedicated link is pre-configured between the base station and the base station controller.

For example, the activating unit 52 in this embodiment may specifically activate the pre-configured dedicated link according to an instruction of the base station controller included in an FP frame, where the instruction included in the FP frame includes identification information of the dedicated link or enable indicator information of the dedicated link, and send a instruction for transiting to the CELL_DCH state of the base station controller included in the FP frame to the terminal.

Further, the activating unit 52 may further send a state update message to the base station controller, to confirm to the base station controller that the dedicated link pre-configured by the pre-configuring unit 51 has been activated.

In this embodiment, before the base station controller determines that the terminal needs to transit to the CELL_DCH state, the pre-configuring unit interacts with the base station controller to pre-configure a dedicated link, so that, when the base station controller determines that the terminal needs to transit from the CELL_FACH state to the CELL_DCH state, the activating unit can activate the pre-configured dedicated link according to an instruction of the base station controller and send a instruction for transiting to the CELL_DCH state of the base station controller to the terminal. This avoids prolonged state transition of the terminal caused by the need for the base station controller to instruct, through a radio link setup process, the base station to set up a dedicated link for the terminal, thereby effectively saving the time for the terminal to transit its state.

It should be noted that, for brevity, the foregoing method embodiments are represented as a series of actions. However, persons skilled in the art should understand that the present invention is not limited to the order of the described actions, because according to the present invention, some steps may adopt other order or occur simultaneously. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

It may be clearly understood by persons skilled in the art that, for the purpose of convenient and brief description, for a detailed working process of the foregoing system, apparatus and unit, reference may be made to the corresponding process in the foregoing method embodiments, and the details will not be described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, as long as such modifications or replacements do not cause the essence of corresponding technical solutions to depart from the spirit and scope of the technical solutions of the embodiments of the present invention.

## Claims

1. A method for state transition, **characterized in** comprising:
interacting, by a base station controller, with a base station to pre-configure a dedicated link; and
instructing, by the base station controller, the base station to activate the pre-configured dedicated link and instructing a terminal to transit to a cell dedicated channel (CELL_DCH) state when the base station controller determines that the terminal needs to transit from a cell forward access channel (CELL_FACH) state to the CELL_DCH state.

2. The method according to claim 1, **characterized in that** the interacting, by the base station controller, with the base station to pre-configure the dedicated link comprises:
sending, by the base station controller, a pre-configured link setup request message to the base station, wherein the pre-configured link setup request message comprises configuration information of the pre-configured link; and
receiving, by the base station controller, a pre-configured link setup response message sent by the base station, wherein the pre-configured link setup response message comprises allocated resource information of the pre-configured link.

3. The method according to claim 2, **characterized in that** the configuration information of the pre-configured link comprises at least one of the following:
media access control-d flow configuration information;
fractional dedicated physical control channel information; and
uplink scrambling code information.

4. The method according to claim 2, **characterized in that** the resource information of the pre-configured link comprises at least one of the following:
transport bearer information;
signature sequence information of enhanced dedicated channel hybrid automatic repeat request acknowledgement indicator channel; and
signature sequence information of enhanced dedicated channel relative grant channel.

5. The method according to any one of claims 1 to 4, **characterized in that** the instructing, by the base station controller, the base station to activate the pre-configured dedicated link comprises:
instructing, by the base station controller by using a frame protocol (FP) frame, the base station to activate the pre-configured dedicated link, wherein the FP frame comprises identification information of the dedicated link or enable indicator information of the dedicated link.

6. The method according to claim 5, **characterized in that** the FP frame further comprises at least one of the following:
reconfiguration parameter information of the pre-configured dedicated link, for the base station to update the pre-configured dedicated link;
enabling feature list information of the pre-configured dedicated link;
disabled feature list information of the pre-configured dedicated link; and
identification information of a reference common enhanced dedicated channel resource.

7. The method according to claim 5, **characterized in that**, after the instructing, by the base station controller, the base station to activate the pre-configured dedicated link, the method further comprises:
receiving, by the base station controller, a state update message sent by the base station, to confirm that the base station has activated the pre-configured dedicated link.

8. A method for state transition, **characterized in** comprising:
interacting, by a base station, with a base station controller to pre-configure a dedicated link; and
when the base station controller determines that a terminal needs to transit from a cell forward access channel (CELL_FACH) state to a cell dedicated channel (CELL_DCH) state, activating, by the base station, the pre-configured dedicated link according to an instruction of the base station controller and sending a instruction for transiting to the CELL_DCH state of the base station controller to the terminal.

9. The method according to claim 8, **characterized in that** the interacting, by the base station, with the base station controller to pre-configure the dedicated link comprises:
receiving, by the base station, a pre-configured link setup request message sent by the base station controller, wherein the pre-configured link setup request message comprises configuration information of the pre-configured link; and
sending, by the base station, a pre-configured link setup response message to the base station controller, wherein the pre-configured link setup response message comprises allocated resource information of the pre-configured link.

10. The method according to claim 9, **characterized in that** the configuration information of the pre-configured link comprises at least one of the following:
media access control-d flow configuration information;
fractional dedicated physical control channel information; and
uplink scrambling code information.

11. The method according to claim 9, **characterized in that** the resource information of the pre-configured link comprises at least one of the following:
transport bearer information;
signature sequence information of enhanced dedicated channel hybrid automatic repeat request acknowledgement indicator channel; and
signature sequence information of enhanced dedicated channel relative grant channel.

12. The method according to any one of claims 8 to 11, **characterized in that** the activating, by the base station, the pre-configured dedicated link according to the instruction of the base station controller comprises:
activating, by the base station, the pre-configured dedicated link according to an instruction of the base station controller comprised in a frame protocol (FP) frame, wherein the instruction comprised in the FP frame comprises identification information of the dedicated link or enable indicator information of the dedicated link.

13. The method according to claim 12, **characterized in that** the FP frame further comprises at least one of the following:
reconfiguration parameter information of the pre-configured dedicated link;
enabling feature list information of the pre-configured dedicated link;
disabled feature list information of the pre-configured dedicated link; and
identification information of a reference common enhanced dedicated channel resource.

14. The method according to claim 12, **characterized in that**, after the activating, by the base station, the pre-configured dedicated link according to the instruction of the base station controller, the method further comprises:
sending, by the base station, a state update message to the base station controller, to confirm to the base station controller that the pre-configured dedicated link has been activated.

15. A base station controller, **characterized in** comprising:
a pre-configuring unit, configured to interact with a base station to pre-configure a dedicated link; and
an instructing unit, configured to instruct, when the base station controller determines that a terminal needs to transit from a cell forward access channel (CELL_FACH) state to a cell dedicated channel (CELL_DCH) state, the base station to activate the dedicated link pre-configured by the pre-configuring unit and instruct the terminal to transit to the CELL_DCH state.

16. The base station controller according to claim 15, **characterized in that** the pre-configuring unit is specifically configured to:
send a pre-configured link setup request message to the base station, wherein the pre-configured link setup request message comprises configuration information of the pre-configured link, and receive a pre-configured link setup response message sent by the base station, wherein the pre-configured link setup response message comprises allocated resource information of the pre-configured link.

17. The base station controller according to claim 15 or 16, **characterized in that** the instructing unit is specifically configured to:
instruct, by using a frame protocol (FP) frame, the base station to activate the dedicated link pre-configured by the pre-configuring unit and instruct the terminal to transit to the CELL_DCH state, wherein the FP frame comprises identification information of the dedicated link or enable indicator information of the dedicated link and state transition instruction information.

18. The base station controller according to claim 17, **characterized in that** the instructing unit is further configured to:
receive a state update message sent by the base station, to confirm that the base station has activated the pre-configured dedicated link.

19. A base station, **characterized in** comprising:
a pre-configuring unit, configured to interact with a base station controller to pre-configure a dedicated link; and
an activating unit, configured to activate, when the base station controller determines that a terminal needs to transit from a cell forward access channel (CELL_FACH) state to a cell dedicated channel (CELL_DCH) state, the dedicated link pre-configured by the pre-configuring unit according to an instruction of the base station controller and send a instruction for transiting to the CELL_DCH state of the base station controller to the terminal.

20. The base station according to claim 19, **characterized in that** the pre-configuring unit is specifically configured to:
receive a pre-configured link setup request message sent by the base station controller, wherein the pre-configured link setup request message comprises configuration information of the pre-configured link, and send a pre-configured link setup response message to the base station controller, wherein the pre-configured link setup response message comprises allocated resource information of the pre-configured link.

21. The base station according to claim 19 or 20, **characterized in that** the activating unit is specifically configured to:
activate the pre-configured dedicated link according to an instruction of the base station controller comprised in a frame protocol (FP) frame, wherein the instruction comprised in the FP frame comprises identification information of the dedicated link or enable indicator information of the dedicated link, and send a instruction for transiting to the CELL_DCH state of the base station controller comprised in the FP frame to the terminal.

22. The base station according to claim 21, **characterized in that** the activating unit is further configured to:
send a state update message to the base station controller, to confirm to the base station controller that the pre-configured dedicated link has been activated.
